(19) **Europäisches Patentamt** / **European Patent Office** / **Office européen des brevets**

(11) **EP 4 691 666 A1**

(12) **EUROPEAN PATENT APPLICATION**
published in accordance with Art. 153(4) EPC

(43) Date of publication:
**11.02.2026 Bulletin 2026/07**

(21) Application number: **23930929.7**

(22) Date of filing: **15.12.2023**

(51) International Patent Classification (IPC):
**B22F 1/00** *(2022.01)* **B22F 1/105** *(2022.01)*
**B22F 1/16** *(2022.01)* **B22F 10/28** *(2021.01)*
**B33Y 10/00** *(2015.01)* **B33Y 70/00** *(2020.01)*
**C22C 9/00** *(2006.01)*

(52) Cooperative Patent Classification (CPC):
**B22F 1/00; B22F 1/105; B22F 1/16; B22F 10/28;
B33Y 10/00; B33Y 70/00; C22C 9/00;** Y02P 10/25

(86) International application number:
**PCT/JP2023/045134**

(87) International publication number:
**WO 2024/202310 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.03.2023 JP 2023049195**

(71) Applicant: **JX Advanced Metals Corporation
Tokyo 105-8417 (JP)**

(72) Inventors:
• **WATANABE, Hirofumi
Kitaibaraki-shi, Ibaraki 319-1535 (JP)**

• **KUWAYAMA, Yasuhiro
Kitaibaraki-shi, Ibaraki 319-1535 (JP)**
• **TSUCHIDA, Katsuyuki
Kitaibaraki-shi, Ibaraki 319-1535 (JP)**
• **PATIL, Dhairyasheel Dhanaji
Oxford Pioneer Park, Mead Road, Yarnton,
Oxfordshire, OX5 1QU (GB)**
• **BALACHANDRAN Nair, Shanoob
Oxford Pioneer Park, Mead Road, Yarnton,
Oxfordshire, OX5 1QU (GB)**
• **KHORSAND, Shohreh
Oxford Pioneer Park, Mead Road, Yarnton,
Oxfordshire, OX5 1QU (GB)**

(74) Representative: **Mewburn Ellis LLP
Aurora Building
Counterslip
Bristol BS1 6BX (GB)**

(54) **ADDITIVE MANUFACTURING METAL POWDER AND METHOD FOR PRODUCING ADDITIVE MANUFACTURING METAL POWDER**

(57) A metal powder for additive manufacturing, the metal powder containing copper-containing particles 1 and laser-absorbing powder 2 adhering to surfaces of the copper-containing particles 1.

[FIG. 1]

EP 4 691 666 A1

## Description

[Technical Field]

This specification discloses a metal powder for additive manufacturing and a method for manufacturing the same.

[Background Art]

In metal additive manufacturing as one of the additive manufacturing (so-called AM) techniques, an article may be manufactured, for example, by irradiating a thinly spread metal powder with a laser beam or electron beam, based on a cross-sectional data of an article to be manufactured, and melting and solidifying or sintering a part of the metal powder to form a layer, and repeatedly depositing the metal powder thereon and irradiating it with the laser beam or the like.

To manufacture copper or copper alloy articles with excellent electrical and thermal conductivity by such additive manufacturing, copper or copper alloy powder is used as the metal powder.

Here, copper and copper alloys not only have low laser absorption coefficient but also high thermal conductivity, which will cause heat from the laser beam to escape easily. Therefore, the copper powder and copper alloy powder cannot be sufficiently melted or sintered unless they are irradiated with a laser beam at higher output than usual for a relatively long period of time, so that it may not be possible to perform additive manufacturing efficiently. In contrast, for example, to "provide a copper powder for 3D printers that can be fusion-bonded with a low energy laser by enabling a high absorption coefficient during irradiation with laser and efficient heat input, and a method for producing the same", Patent Literature 1 proposes "a copper powder, wherein an absorption coefficient is 18.9% to 65.0% for light with a wavelength of $\lambda = 1060$ nm, and an index expressed as absorption coefficient/oxygen concentration for light with a wavelength of $\lambda = 1060$ nm is 3.0 or more".

With regard to the copper alloy powder, Patent Literature 2 describes "a metal powder for additive manufacturing, the metal powder comprising 0.10% by mass or more and 1.00% by mass or less of at least one of chromium and silicon, the total amount of the chromium and silicon being 1.00% or less, the balance being copper". According to Patent Literature 2, it discloses that such a "metal powder" provides "an additive manufactured article made of a copper alloy that can achieve both mechanical strength and electrical conductivity".

[Citation List]

[Patent Literature]

[PTL 1] Japanese Patent Application Publication No. 2018-178239 A
[PTL 2] Japanese Patent Application Publication No. 2016-211062 A

[Summary of Invention]

[Technical Problem]

By the way, the copper powder or copper alloy powder has a lower laser absorption coefficient, so that it is difficult for the laser beam to be absorbed into the copper or copper alloy powder when additive manufacturing is performed using the powder. This results in insufficient melting or sintering of the copper or copper alloy powder, resulting in an article with lower density and electrical conductivity.

This specification provides a powder for additive manufacturing metal that has a relatively high laser absorption coefficient and can contribute to improvement of electrical conductivity of an article produced when additive manufacturing is performed, and a method for producing the metal powder for additive manufacturing.

[Solution to Problem]

The metal powder for additive manufacturing disclosed in this specification includes: copper-containing particles that contain copper; and laser-absorbing powder adhering to surfaces of the copper-containing particles.

The method for producing the metal powder for additive manufacturing disclosed in this specification includes a step of mixing a copper powder or a copper alloy powder with a laser-absorbing powder and allowing the laser-absorbing powder to adhere to surfaces of copper-containing particles of the copper powder or the copper alloy powder.

[Advantageous Effects of Invention]

According to the metal powder for additive manufacturing as described above, it has a relatively high laser absorption coefficient, which can contribute to improvement of electrical conductivity of an article produced when additive manufacturing is performed.

[Brief Description of Drawings]

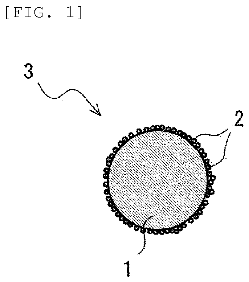

[FIG. 1] FIG. 1 is a cross-sectional view schematically showing powder-adhering particles contained in a metal powder for additive manufacturing according an embodiment.

[Description of Embodiments]

Hereinafter, an embodiment of the metal powder for additive manufacturing as described above and a method for producing the same will be described in detail with reference to the drawings. Reference numerals will be used herein as necessary, but the reference numerals may be omitted when they are not necessary.

(Metal Powder)

A metal powder for additive manufacturing (hereinafter simply referred to as a "metal powder") according to an embodiment contains powder-adhering particles 3 in which laser-absorbing powder 2 adheres around copper-containing particles 1, as schematically shown in FIG. 1.

The copper-containing particles 1 are made of copper or copper alloy containing copper. For the copper-containing particles 1 made of copper, a content of copper in the metal powder is, for example, 99.9% by mass or more. Also, for the copper-containing particles 1 made of copper alloy, for example, the metal powder may contain copper in an amount of 90 to 99.9% by mass and one or more alloying elements selected from the group consisting of Al, Cr, Fe, Ni, Nb, P, Si, Ti, Zn, and Zr in an amount of 0.1% by mass to 10.0% by mass in total if more than one element is contained. The contents of copper and the alloying elements in the metal powder can be determined by the inductively coupled plasma optical emission spectrometry (ICP-OES).

The laser-absorbing powder 2 adheres around the copper-containing particles 1. This facilitates absorption of the laser beam into the copper-containing particles 1 by the laser-absorbing powder 2 around the copper-containing particles 1 during manufacturing when the metal powder is used for additive manufacturing, leading to easy melting or sintering of the copper-containing particles 1. As a result, it is expected that a manufactured article having high density can be produced and that the electrical conductivity of the manufactured article will increase.

The laser-absorbing powder 2 is preferably a substance having a higher melting point than copper. The laser-absorbing powder 2 preferably contains an element(s) or a compound(s) that will be difficult to react with copper. This is because if the laser-absorbing powder 2 contains a element (s) or a compound(s) that can become solid solution in copper, the electrical conductivity of the manufactured article may not be so high due to its solid solution in copper during additive manufacturing. When the copper-containing particles 1 are made of the copper alloy, the substance contained in the laser-absorbing powder 2 is preferably a substance that will react with the alloying element(s) in solid solution in copper and be deposited. When the substance reacts with the alloying element(s) and is deposited, the mother phase becomes almost pure copper to improve electrical conductivity.

Specific materials for the laser-absorbing powder 2 as described above include, for example, B (boron) as a simple substance, borides such as $TiB_2$, and oxides such as $Y_2O_3$.

If the laser-absorbing powder 2 contains B, the B in such laser-absorbing powder 2 may be in the form of a simple substance or in the form of $TiB_2$. For example, the laser-absorbing powder 2 to adhere to the surfaces of the copper-containing particles 1 made of copper can contain $TiB_2$. Alternatively, the laser-absorbing powder 2 to adhere to the surfaces of the copper-containing particles 1 made of the copper alloy (such as Cu-Ti alloy) can contain B as a simple substance. The B of the laser-absorbing powder 2 adhering to the surfaces of the copper-containing particles 1 made of the copper alloy reacts with its alloying element(s) to cause deposition during additive manufacturing, which makes the matrix phase almost pure copper and improving electrical conductivity.

If the laser-absorbing powder 2 adhering around the copper-containing particles 1 contains $TiB_2$, the metal powder containing such powder-adhering particles 3 will contain Ti and B. The content of Ti in the metal powder is preferably less than or equal to 1% by mass and more preferably less than or equal to 0.5% by mass as a percentage relative to the total mass of the metal powder. By reducing the content of Ti to some small amount, the electrical conductivity of the manufactured article can be effectively improved. The content of Ti may be, for example, 0.01% by mass or more, typically 0.1 to 0.5% by mass. When the laser-absorbing powder 2 contains $TiB_2$, the content of B is preferably varied depending on the content of Ti, and the content of B / (the content of Ti + the content of B) on a mass basis is preferably 0.1 or more and less than 0.5, and more preferably 0.2 or more and less than 0.4. When the content of B / (the content of Ti + the content of B) is in this range, it is expected that $TiB_2$ is formed in the manufactured article. When $TiB_2$ is formed in the manufactured article, the mother phase becomes almost pure copper and improves electrical conductivity.

The contents of Ti and B in the metal powder can be determined by the inductively coupled plasma optical emission spectrometry (ICP-OES).

If the laser-absorbing powder 2 adhering around the copper-containing particles 1 contains $Y_2O_3$, the metal powder containing such powder-adhering particles 3 will contain Y. The content of Y in the metal powder is preferably less than or equal to 1% by mass and more preferably less than or equal to 0.5% by mass as a percentage relative to the total mass of the metal powder. If the content of Y is too high, the electrical conductivity of the manufactured article is not improved. The content of Y may be, for example, 0.01% by mass or more, typically 0.1 to 0.5% by mass. The oxygen content is preferably varied depending on the content of Y, and the oxygen content / (Y content + oxygen content) on a mass basis is preferably 0.1 or more and less than 1, and more preferably 0.2 or more and less than 0.4. When the oxygen content / (Y content + oxygen content) is in this range, it is expected that $Y_2O_3$ is formed in the manufactured article. When $Y_2O_3$ is formed in the manufactured article, the mother phase becomes almost pure copper to improve electrical conductivity.

The content of Y in the metal powder can be determined by the inductively coupled plasma optical emission spectrometry (ICP-OES). The oxygen content of the metal powder can be measured by an inert gas fusion-infrared absorption method. Here, two measurements are performed on a 1 g sample of metal powder using LECO's TCH600, and an average value thereof can be used as the oxygen content.

The presence of $TiB_2$ or $Y_2O_3$ in the laser-absorbing powder 2 adhering around the copper-containing particles 1, as described above, can be confirmed by X-ray photoelectron spectroscopy (XPS).

The metal powder preferably has an average particle size D50 of 10 μm to 150 μm. By preventing the average particle size D50 from being excessively decreased, the metal powder is difficult to fly during additive manufacturing to provide easy handling, as well as the required fluidity is exerted to allow the powder to be laid down at the intended position, thereby enhancing formability. By maintaining the average particle size D50 at a certain size, the energy required to melt or sinter the metal powder with the laser beam can be reduced and the accuracy of manufacturing can be improved.

The above average particle diameter D50 means the particle diameter of the metal powder in which, when measuring the particle diameter of the metal powder using a laser diffraction/scattering particle size distribution measuring device, a cumulative frequency of the metal powder on a volume basis is 50% in the resulting particle size histogram (particle size distribution graph), and it is measured according to JIS Z8825 (2013). More specifically, MT 3300 EXII from Microtrac Bell can be used for the measurement of the average particle size D50, with pure water as the solvent and a refractive index of 1.33.

Since a fiber laser with a wavelength of about 1060 nm is used for general laser-based additive manufacturing, the laser absorption coefficient of the metal powder is calculated by measuring the reflectance at a wavelength of 1060 nm using the following equipment and conditions. The laser absorption coefficient of the metal powder is preferably 15% or more, and even more preferably 25% or more.

Manufacturer: Shimadzu Corporation;
Instrument: Spectrophotometer (MPC-3100, using powder holder) ;
Measurement wavelength: 300 to 1500 mm;
Slit width: 20 nm;
Reference: $BaSO_4$;
Measured physical property value: Reflectance;

```
Absorption coefficient (%) = 1 - (Reflectance (%)).
```

(Production Method)

To produce the metal powder as described above, for example, a copper powder or a copper alloy powder is first prepared. The copper powder or copper alloy powder may be prepared by purchasing already produced powders or by other means, or prepared by atomization or various other methods.

The copper powder mainly contains copper-containing particles, which contain copper, and have a copper content of 99.9% by mass or higher (purity of 3N or higher). The copper alloy powder mainly contains copper-containing particles which contain copper alloy. The copper alloy powder may be used, which has a copper content of 80% by mass or more, even 85% by mass or more, even 90% by mass or more, or even 99% by mass or more, and contains one or more alloying elements selected from the group consisting of Al, Cr, Fe, Ti, Ni, Nb, P, Si, Zn, and Zr, other than copper.

The copper powder or copper alloy powder preferably has an average particle diameter D50 of 10 μm to 150 μm,

when adjusting the particle size by sieving or the like as needed. The average particle diameter D50 has the same meaning as the average particle diameter D50 previously described for the metal powder, and can be measured by the same method.

The above copper powder or copper alloy powder can be mixed with a laser-absorbing powder, thereby allowing the laser-absorbing powder to adhere to the surfaces of the copper-containing particles to produce a metal powder.

The laser-absorbing powder to be mixed with the copper-containing particles of the copper powder or copper alloy powder is preferably a fine powder having a fine particle size. The laser-absorbing powder preferably has an average particle size D50 of 10 $\mu$m or less. This average particle diameter D50 has the same meaning as the average particle diameter D50 as described above.

However, a fine laser-absorbing powder having an average particle size of 10 $\mu$m or less, for example, may be agglomerated. If there are many agglomerated matters of the laser-absorbing powder, the agglomerated matters can be easily eliminated by mixing the laser-absorbing powder with the copper powder or copper alloy powder and then sieving it at the same time with the copper powder or the copper alloy powder.

Any method of mixing, such as mixing in a ball mill or mixer, can be employed. For example, the copper powder or copper alloy powder is fed into a ball mill, and a laser-absorbing powder such as $TiB_2$ powder or B powder or $Y_2O_3$ powder is fed into the mill, and the mill is rotated at 50 rpm or more for about 10 to 90 minutes to provide a metal powder containing the powder-adhering particles 3 as shown in FIG. 1.

Thus, the metal powder containing the copper-containing particles and the laser-absorbing powder can be produced.

[Examples]

Next, the metal powder for additive manufacturing as described above was experimentally produced and the effects thereof were confirmed, as described below. However, descriptions herein are merely for illustration, and are not intended to be limited thereto.

A pure copper or copper alloy powder having an average particle size D50 of about 30 $\mu$m to 45 $\mu$m was prepared. The content of copper in the pure copper powder is 99.9% by mass, and the copper alloy powder contains 0.3% by mass of Ti.

(Example 1)

The above copper powder was mixed with $TiB_2$ powder (laser-absorbing powder) using a ball mill for 30 minutes to produce a metal powder with laser-absorbing powder adhering to the surfaces of the copper-containing particles.

(Example 2)

The above copper powder was mixed with $Y_2O_3$ powder (laser-absorbing powder) using a ball mill for 30 minutes to produce a metal powder with laser-absorbing powder adhering on the surfaces of the copper-containing particles.

(Example 3)

The above copper alloy powder was mixed with B powder (laser-absorbing powder) using a ball mill for 30 minutes to produce a metal powder with laser-absorbing powder adhering on the surfaces of the copper-containing particles.

(Comparative Example 1)

The above copper powder was used as a metal powder as it is.

(Evaluation)

For each of the above metal powders, the average particle diameter D50 and the contents of the components in the laser-absorbing powder were confirmed by the method described above, and are shown in Table 1. The metal powders in Examples 1 and 2 were analyzed by the previously described method to confirm the presence of laser-absorbing powders each having the predetermined materials.

To confirm the effect of each metal powder, a 20 mm square cube-shaped article was produced with the metal powder using a manufacturing machine, and the resulting manufactured article was evaluated for the density and electrical conductivity. The manufacturing machine was a Renishaw AM400 with an output of 400 W and a scanning speed of 400 mm/sec.

As for the density of the above manufacture article, the relative density was determined by measuring a percentage of areas of voids in an image observed under an optical microscope. The relative density was calculated from the equation: relative density = ((area of article - area of voids) / area of article) x 100 (%). The same calculation was performed when an article was prepared with a metal powder produced using a copper alloy powder.

The electrical conductivity was calculated by passing eddy current through the manufactured article and then calculating the electrical conductivity from the current value of the eddy current. Further, the manufactured articles were subjected to an aging treatment in an Ar atmosphere by heating them at 1000°C for 2 hours in Example 1 and 700°C for 2 hours in Example 3, to confirm if the electrical conductivity could be increased.

These results shown in Table 1.

[Table 1]

| | Materials for Copper-Containing Particles | D50 [μm] | Laser-Absorbing Powder Presence/Absence /Material | Ti Content [wt%] | B Content [wt%] | Y Content [wt%] | O Content [wtppm] | Laser Absorption Coefficient [%] | Article Density [%] | Conductivity before Aging Treatment [% IACS] | Conductivity after Aging Treatment [% IACS] |
|---|---|---|---|---|---|---|---|---|---|---|---|
| Ex. 1 | Pure Copper | 38 | $TiB_2$ | 0.2 | 0.3 | - | - | 44 | 98.8 | 85 | 98 |
| Ex. 2 | Pure Copper | 43 | $Y_2O_3$ | - | - | 0.4 | 1000 | 15 | 99.5 | 95 | - |
| Ex. 3 | Cu-Ti | 39 | B | 0.3 | 0.2 | - | - | 51 | 99.8 | 51 | 92.2 |
| Comp. 1 | Pure Copper | 35 | Absence | - | - | - | 100 | 10 | 78.3 | 47 | - |

Comparative Example 1 had an electrical conductivity of less than 80%, while articles of Examples 1 and 3, made under the same manufacturing conditions, were able to achieve a conductivity of more than or equal to 90% IACS after the aging treatment. Example 2 achieved more than or equal to 95% IACS without the aging treatment. This confirmed the effect of the laser-absorbing powder.

In view of the foregoing, it was found that the metal powders described above had the improved laser absorption coefficient, and were effective for manufacturing the article having high electrical conductivity.

Description of Reference Numerals

1    copper-containing particle
2    laser-absorbing powder
3    powder-adhering particle

**Claims**

1.  A metal powder for additive manufacturing, the metal powder comprising: copper-containing particles which comprise copper; and a laser-absorbing powder adhering to surfaces of the copper-containing particles.

2.  The metal powder for additive manufacturing according to claim 1, wherein the laser-absorbing powder comprises B.

3.  The metal powder for additive manufacturing according to claim 2, wherein the laser-absorbing powder comprises $TiB_2$.

4.  The metal powder for additive manufacturing according to claim 3, wherein the metal powder has a content of Ti of 0.1 to 0.5% by mass as a percentage relative to the total mass of the metal powder.

5.  The metal powder for additive manufacturing according to claim 1, wherein the laser-absorbing powder comprises an oxide.

6.  The metal powder for additive manufacturing according to claim 5, wherein the oxide is $Y_2O_3$.

7.  The metal powder for additive manufacturing according to claim 6, wherein the metal powder has a content of Y of 0.1 to 0.5% by mass as a percentage relative to the total mass of the metal powder.

8.  The metal powder for additive manufacturing according to any one of claims 1 to 7, wherein the metal particle has an average particle size D50 of 10 $\mu$m to 150 um.

9.  A method for producing a metal powder for additive manufacturing, the method comprising a step of:
    mixing a copper powder or a copper alloy powder with a laser-absorbing powder and allowing the laser-absorbing powder to adhere to surfaces of copper-containing particles of the copper powder or the copper alloy powder.

10. The method for producing a metal powder for additive manufacturing according to claim 9, wherein a laser absorbing powder comprising $TiB_2$ or $Y_2O_3$ is used as the laser-absorbing powder.

[FIG. 1]

## INTERNATIONAL SEARCH REPORT

| International application No. |
|---|
| **PCT/JP2023/045134** |

**A. CLASSIFICATION OF SUBJECT MATTER**

*B22F 1/00*(2022.01)i; *B22F 1/105*(2022.01)i; *B22F 1/16*(2022.01)i; *B22F 10/28*(2021.01)i; *B33Y 10/00*(2015.01)i; *B33Y 70/00*(2020.01)i; *C22C 9/00*(2006.01)i
FI:  B22F1/00 L; B22F1/105; B22F1/16; B22F10/28; B33Y10/00; B33Y70/00; C22C9/00

According to International Patent Classification (IPC) or to both national classification and IPC

**B. FIELDS SEARCHED**

Minimum documentation searched (classification system followed by classification symbols)

B22F1/00; B22F1/105; B22F1/16; B22F10/28; B33Y10/00; B33Y70/00; C22C9/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | CN 109746435 A (INSTITUTE OF PROCESS ENGINEERING, CHINESE ACADEMY OF SCIENCES) 14 May 2019 (2019-05-14) | 1-2, 8-9 |
| | claims 1-10, paragraphs [0004], [0039]-[0045], fig. 1-5 | |
| A | | 3-7, 10 |
| X | JP 2017-141505 A (JTEKT CORP.) 17 August 2017 (2017-08-17) | 1, 9 |
| | paragraphs [0003]-[0006], [0107]-[0128], [0145]-[0150], fig. 15-16 | |
| A | | 2-7, 10 |
| X | JP 2016-532773 A (SAFRAN AIRCRAFT ENGINES) 20 October 2016 (2016-10-20) | 1-10 |
| | paragraphs [0081], [0137]-[0143], [0155]-[0160], fig. 6C, etc. | |
| A | JP 2019-123920 A (MITSUBISHI MATERIALS CORPORATION) 25 July 2019 (2019-07-25) | 1-10 |
| | entire text | |

☑ Further documents are listed in the continuation of Box C.  ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 January 2024** | **30 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
| --- |
| **PCT/JP2023/045134** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 7192161 B2 (JX NIPPON MINING & METALS CORP.) 19 December 2022 (2022-12-19) entire text | 1-10 |
| A | JP 2022-160961 A (SANYO SPECIAL STEEL CO., LTD.) 20 October 2022 (2022-10-20) entire text | 1-10 |
| A | CN 107723511 A (SHANDONG JIANZHU UNIVERSITY) 23 February 2018 (2018-02-23) entire text | 1-10 |

Form PCT/ISA/210 (second sheet) (July 2022)

## INTERNATIONAL SEARCH REPORT
### Information on patent family members

International application No.

**PCT/JP2023/045134**

| Patent document cited in search report | | | Publication date (day/month/year) | Patent family member(s) | | | Publication date (day/month/year) |
|---|---|---|---|---|---|---|---|
| CN | 109746435 | A | 14 May 2019 | (Family: none) | | | |
| JP | 2017-141505 | A | 17 August 2017 | US<br>paragraphs [0006]-[0008],<br>[0132]-[0155], [0173]-[0175],<br>fig. 15-16<br>DE<br>CN | 2017/0225228<br><br><br><br>102017102355<br>107042306 | A1<br><br><br><br>A1<br>A | |
| JP | 2016-532773 | A | 20 October 2016 | US<br>paragraphs [0082], [0146]-<br>[0152], [0164]-[0169], fig. 6C,<br>etc.<br>WO<br>CN | 2016/0175929<br><br><br><br>2015/001241<br>105764634 | A1<br><br><br><br>A2<br>A | |
| JP | 2019-123920 | A | 25 July 2019 | (Family: none) | | | |
| JP | 7192161 | B2 | 19 December 2022 | US<br>entire text<br>EP<br>CN | 2022/0362844<br><br>4032639<br>114765968 | A1<br><br>A1<br>A | |
| JP | 2022-160961 | A | 20 October 2022 | WO<br>TW | 2022/215468<br>202246069 | A1<br>A | |
| CN | 107723511 | A | 23 February 2018 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018178239 A
- JP 2016211062 A